# EUROPEAN PATENT APPLICATION

(11) **EP 4 310 250 A1**
(43) Date of publication of application: **24.01.2024**
(21) Application number: 23185469.6
(22) Date of filing: 14.07.2023
(51) Int. Cl.: D21H 19/08, B32B 15/08, B32B 15/12, B32B 23/06, D21H 19/52, D21H 19/54, D21H 19/60, D21H 19/82, D21H 27/10

(54) **BARRIER-COATED CELLULOSE-BASED SUBSTRATE, LAMINATED PACKAGING MATERIAL AND PACKAGING CONTAINER COMPRISING THE CELLULOSE-BASED SUBSTRATE**

(30) Priority: 18.07.2022 EP 22185531
(71) Applicant: Tetra Laval Holdings & Finance S.A., 1009 Pully (CH)
(72) Inventor: CHRISTOFFERSSON, Jonas, 221 86 Lund (SE); GERARDI, Daniele, 41123 Modena (IT); CAMACHO, Walker, 221 86 Lund (SE); TOFT, Nils, 221 86 Lund (SE); TANDOI, Giuseppe, 41123 Modena (IT); ANDERSSON, Håkan, 221 86 Lund (SE)
(74) Representative: Tetra Pak - Patent Attorneys SE

(57) **Abstract**

The present invention relates to a high-quality, heat-sealable gas barrier-coated cellulose-based substrate (10). The invention further relates to a laminated packaging material (20) comprising the barrier-coated celluose-based substrate (10; 25), suitable for heat-sealable packaging of oxygen-sensitive products, and to packaging containers made from the laminated packaging material.

## Description

### Technical field

The present invention relates to a barrier-coated cellulose-based substrates for packaging of oxygen -sensitive products, such as food products. The invention further relates to a method for manufacturing the barrier-coated cellulose-based substrate and to a laminated packaging material comprising the barrier-coated cellulose-based substrate, for packaging of oxygen sensitive products, such as food products, such as liquid or semi-liquid food, and to a packaging container comprising the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal, by fold formation along prepared crease lines in the packaging material. Each package may be equipped with an opening device, such as a screw cork, before or after filling, forming and sealing of the container.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging has inherent barrier properties also to water vapour, to light, to aroma, flavour and acidic substances, and is still the most cost-efficient packaging material, at its level of performance, available on the market today. Moreover, the aluminium foil enables heat sealing and heating of the laminated material by means of induction in the aluminium foil.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is an incentive towards developing pre-manufactured films or sheets having high and multiple barrier functionalities, which may replace the aluminium-foil barrier material in the conventional laminated packaging material or, be combined with other barrier layers in the laminated material and adapt them to conventional processes for lamination and manufacturing.

Preferred types of such alternative, more environmentally sustainable barrier materials are barrier-coated paper substrates made by aqueous dispersion coating or vapour deposition coating onto thin paper carrier substrates. There are various aqueous dispersion coating processes and vapour deposition coating processes and material recipes for such coatings, but there is a need for cost-efficient barrier materials of this "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a pre-coated and metallised Kraft paper substrate for the purpose of induction heat sealing. It recommends rather thick coating layers and to include additional nano-clay particles in the pre-coating, and for good gas barrier properties there should also be applied further barrier coating layers in the packaging laminate, such as onto the back side of the paper substrate or onto the bulk paperboard layer.

The earlier patent publication WO2017/089508A1 discloses how further improved barrier properties may be obtained from a metallised paper in a similar packaging laminate, by selecting a paper substrate providing optimal properties. Such a metallised paper substrate provided not only improved barrier properties, but also indicated better stability of the metallised layer for induction heat sealing purposes.

There still remains, however, a need for a more robust and reliable barrier-coated cellulose-based substrate to provide both optimal oxygen gas barrier properties and reliable heat sealability by means of high-frequency induction heating.

There remains generally also a need for improvements regarding recyclability and sustainability of the materials used, aiming to reduce the amounts of materials and the number of different types of materials used.

### Disclosure of the invention

It is, accordingly, an object of the present invention to provide a barrier-coated cellulose-based substrate, suitable as gas barrier material in packaging of oxygen-sensitive products, such as food products, such as in particular liquid or semi-liquid or wet food products, as well as for use in future sustainable, non-aluminium-foil based ("non-foil") laminated packaging materials for heat sealable packaging of oxygen-sensitive products, by means of high-frequency induction heat sealing.

It is further an object of the invention to provide a barrier-coated cellulose-based substrate having good gas barrier properties and high-frequency induction heat sealing properties, as well as improved recyclability and sustainability characteristics, i.e.fulfilling the needs of future sustainable, packaging materials for packaging of oxygen-sensitive products.

A more specific object is to provide a barrier-coated paper or cellulose-based substrate, suitable for use in non-foil, heat-sealable laminated packaging materials and packaging containers for liquid, semi-liquid or viscous food products, to enable long-term aseptic storage under ambient conditions.

A further object is to provide a reliable paper- or paperboard-based, heat-sealable, non-foil, laminated packaging material, having good gas barrier, and water vapour barrier properties, being readily recyclable and environmentally sustainable, for the purpose of wrapping or packaging of oxygen-sensitive products such as food.

Yet a further specific object of the invention is to provide a non-foil, paper- or paperboard-based, packaging laminate having reliable gas and water vapour barrier properties, for the purpose of manufacturing aseptic packaging containers for long-term storage of liquid, semi-liquid or viscous food, at maintained nutritional quality under ambient conditions.

These objects are thus attainable according to the present invention by the barrier-coated paper or cellulose-based substrate, the laminated packaging material and the packaging container, as defined in the appended claims.

### Summary of the invention

According to a first aspect of the invention, there is provided a barrier-coated cellulose-based substrate, for use as a barrier sheet in a heat-sealable laminated packaging material for packaging of oxygen-sensitive products, the barrier-coated cellulose-based substrate comprising a cellulose-based substrate and a base coating, comprising more than 60 weight-% of a material selected from the group consisting of starch, modified starch materials and cellulose ethers, applied onto the surface of a first side of the cellulose-based substrate by means of dispersion or solution coating and subsequent drying, thus providing a smooth and thermo-mechanically resistant base coating, and a metallization coating further applied onto the free surface of the base coating, the metallization coating being applied onto the base coating by means of a vapour deposition method, wherein the barrier-coated cellulose-based substrate further comprises a thermostable gas-barrier top coating, which is applied by means of dispersion or solution coating onto the metallization coating and subsequent drying, and wherein the thermostable gas-barrier top coating is further coated with or laminated to a heat sealable layer of a thermoplastic material, the thermostable gas-barrier top coating having a melting temperature higher than the heat sealable layer of the thermoplastic material, the barrier-coated cellulose-based substrate thus providing good gas barrier properties, as well as enabling robust induction heat sealing conditions in a laminated packaging material for manufacturing of packages therefrom.

The base coating may comprise more than 70 weight-%, such as more than 80 weight-%, such as more than 90 weight-%, such as more than 95 weight-% of the material selected from the group consisting of starch, modified starch materials and cellulose ethers.

Preferably, the base coating comprises a starch or modified starch material.

The base coating may alternatively, or also, comprise a cellulose ether material. The base coating may instead of, or in addition to, a starch or starch-based material also comprise one or more cellulose ethers, selected from the group consisting of methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC.

The metallization coating is a vapour deposited coating of a metal, such as an aluminium coating.

The thermostable gas-barrier top coating may comprise a polymer selected from the group consisting of vinyl alcohol polymers and copolymers, and modified such (co-)polymers, such as from the group consisting of polyvinyl alcohol, PVOH, and ethylene vinyl alcohol, EVOH, and polymer blends comprising in a majority, i.e. at a proportion of more than 50 weight-%, such polymers.

The substrate may be a paper having a grammage from 30 to 70 g/m², as measured according to ISO 536:2012, and a density from 800 kg/m³ to 1400 kg/m³, as measured according to ISO 534:2011.

According to a second aspect of the invention, a method is provided for manufacturing a barrier-coated cellulose-based substrate for use in packaging of oxygen-sensitive products, the method comprising the steps of
a) forwarding a continuous web of a cellulose-based substrate,
b) providing an aqueous base coating composition comprising more than 60 weight-% of a material selected from the group consisting of starch, modified starch materials and cellulose ethers, per dry weight,
c) applying the aqueous base coating composition onto the top side of the web of the cellulose-based substrate by means of dispersion coating, such as a roll coating method,
d) drying the applied aqueous gas barrier polymer coating from step c), to provide a smooth, base coating layer,
e) optionally repeating steps c) and d),
f) vapour deposition coating the base-coated and dried web substrate as obtained from step e), with a metallization coating,
g) applying an aqueous solution or dispersion of a thermostable gas-barrier top coating material onto the metallization coating, preferably by a roll coating method,
h) drying the applied aqueous solution or dispersion from step g) to obtain a thermostable gas-barrier top coating,
i) optionally repeating steps g) and h),
j) thus obtaining a barrier-coated cellulose-based substrate having a minimum of defects in the base coating, in the gas barrier top coating as well as in the metallization coating,
k) further coating the surface of the thermostable gas-barrier top coating with a heat sealable layer of a thermoplastic material, the thermostable gas-barrier top coating layer having a melting temperature higher than the heat sealable layer of the thermoplastic material.

The thermostable gas-barrier top coating material may comprise a polymer
selected from vinyl alcohol polymers and copolymers, such as from the group consisting of polyvinyl alcohol, PVOH, ethylene vinyl alcohol, EVOH, modified vinyl alcohol polymers and copolymers, such as modified PVOH and modified EVOH, and blends comprising in the majority such polymers.

According to a third aspect of the invention, a laminated packaging material is provided, which comprises the barrier-coated cellulose-based substrate as manufactured by the method of the first aspect, and further comprises a first outermost protective material layer and a second innermost liquid tight, heat sealable material layer.

The first outermost protective material layer may be a thin layer of polymer having the purpose of protecting the paper- or paperboard-based laminated packaging material against dirt and moisture on the outside environment of a closed packaging container.

The second innermost liquid tight, heat sealable material layer may comprise a layer of a thermoplastic polymer, which is readily heat sealable by available heat sealing methods, such as induction heat sealing or ultrasonic heat sealing, or mere contact heat sealing.

The second innermost liquid tight, heat sealable material layer may comprise a polyolefin polymer, such as a polyethylene from the lower density range, such as selected from the group consisting of LDPE, LLDPE, m-LLDPE and any blend of two or more thereof.

According to an embodiment, both the first outermost protective material layer and the second innermost liquid tight, heat sealable material layer may comprise a polyolefin polymer, such as polyethylene polymers of the same or different kinds.

For the purpose of carton packaging of oxygen-sensitive products, such as liquid or semi-liquid or viscous food products, the laminated packaging material may further comprise a bulk layer of paper or paperboard or other cellulose-based material, and, arranged on the inner side of the bulk layer of paper or paperboard, between the bulk layer and the second innermost liquid tight, heat sealable material layer, said barrier-coated cellulose-based substrate. The bulk layer may contribute to the bending stiffness of the laminated packaging material, and to dimensional stability of fold-formed packaging containers made thereof, to withstand strong, acting forces created by movement in the packed content of for example liquid and viscous oxygen-sensitive products, during distribution and handling. In such a laminate, the metallization coating is preferably directed towards the inside of the packaging container, i.e. such that the cellulose-based substrate is directed towards the bulk layer while the barrier coatings are directed towards the innermost layer.

In an embodiment, for the purpose of such liquid carton packaging, the second, innermost liquid tight, heat sealable polyolefin layer is a pre-manufactured polyolefin film, such as a pre-manufactured polyethylene film, such as an oriented polyethylene film comprising at least one layer with a majority of an LLDPE polymer, for improved robustness of the mechanical properties of the laminated packaging material.

In a fourth aspect of the invention there is provided a packaging container comprising the laminated packaging material of the third aspect. According to an embodiment, the packaging container is manufactured at least partly from the laminated packaging material of the invention, and according to a further embodiment it is in its entirety made of the laminated packaging material.

The use of a barrier-coated cellulose-based substrate as described above and of the invention, may thus provide for good gas-barrier properties in laminated packaging materials and in packaging containers made thereof and may also provide improved repulpability and recycling properties, i.e. increased sustainability, due to the increased content of easily repulpable cellulose fibres.

Generally, the use of a cellulose-based substrate in laminated materials and packages provide for a greater proportion of fibre content, which is both of renewable, i.e. of non-fossil origin, and possible to recycle or to biodegrade for recirculation of the old materials into creation of new materials. Moreover, the use of papers or cellulose-based substrates as "facing layers" in a sandwich configuration, supports the use of bulk materials having a lower bending stiffness, thus being less complex in design for a maximized bending stiffness, and/ or being of lower density and thus using lower amounts of fibers, thus being less expensive by laminating such facing layers on each side of the bulk layer.

Thus, the gas-barrier-coated cellulose-based substrate of the first aspect, with the resulting material layer configuration, provides good oxygen barrier, as well as good heat sealability properties to a laminated packaging material comprising it, and may further impart also a good recyclability and sustainability profile.

### Detailed description

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus generally focused on the ability to withstand thermal- and mechanical loads e.g., during folding and sealing, without fracturing. More specifically, good adhesion is needed between the respective laminate layers and its adjacent layers, as well as high quality of the individual material layers. Regarding the sealing of the packages, the integrity is mainly focussed on the quality of the sealing joints, which is ensured by well-functioning and robust heat-sealing operations in the filling machines, which in turn is ensured by adequately adapted heat-sealing properties of the laminated packaging material.

The term "liquid, semi-liquid or viscous food" generally refers to food products having a flowing content that optionally may contain also solid pieces of food. Dairy and milk, soy, rice, grains and seed drinks, juice, nectar, still drinks, energy drinks, sport drinks, coffee or tea drinks, coconut water, wine, soups, crushed tomatoes, sauce (such as pasta sauce), beans and olive oil are some non-limiting example of food products contemplated.

Examples of other oxygen-sensitive food products, possible to package and protect with the laminated packaging materials of the present disclosure are e.g. dry and/or fatty foods.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value intact, such as for example its vitamin C content.

With the term "bulk layer" is normally meant the thickest layer or the layer containing the most material in a multilayer laminate, i.e. the layer which is contributing most to the mechanical properties and the dimensional stability of the laminate and the structural stability of packaging containers folded from the laminate, such as a thick paper, paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties, such as bending stiffness, for achieveing structure stability of formed packaging containers.

With the term "non-foil" packaging material, is meant a laminated packaging material, which does not comprise an aluminium foil of a thickness in the micrometer-scale, such as conventional aluminium foils for liquid carton packaging which are normally from 6 to 9 µm thick. A "non-foil" packaging material may comprise a metallisation layer, however, as the thickness of e.g. an aluminium metallisation layer is in the nano-meter scale. The amount of aluminium material employed in such a metallisation coating is very low, and have, in comparison to aluminium foils, a significantly reduced impact on recycling and exploitation of material resources.

The term "thermomechanical stability" about a material or a material layer means that the material has the ability to maintain mechanical stability and geometry at elevated temperatures, also at shaping or forming the material (such as pressing, folding, heat sealing), such that the metallised layer is well supported by such a material or layer and does not deteriorate. Furthermore, the material will not melt or soften upon heating to predetermined temperatures.

OTR is measured herein with an Oxtran 2/21 (Mocon) equipment based on coulometric sensors, according to ASTM F1927-14 and ASTM F1307-14.

The method for determining OTR identified the amount of oxygen per surface and time unit at passing through a material at a defined temperature, a given atmospheric pressure, during a certain time, i.e at an atmosphere of 20, or alternatively, 100 % oxygen, expressed as 0.2 or 1 atm (oxygen), during 24 hours. See further description of OTR test methods in connection with the Examples.

Sheet resistance (Rs) of a metallisation coating may be measured by a contactless method on a laminated material, buy means of NAGY type SRM-12 instrument, from Nagy Instruments, Germany. The set range for measurements in connection to the present invention was from 0.2 to 8 Ohms. Measurements were performed on laminated packaging materials as well as on metallised material only, on samples of a size of 0.05 x 0.05 meters (5 by 5 cm) . Nine measure points were taken from a 1 meter long portion of a web of 0.17 m width, i.e. three measure points from the middle of the web and three measure points closer to each of the respective ends of the web portion. On a sample of homogenous density, the sheet resistance is the value R given by the principal formula R= density * L/W*t , wherein L and W are the sides of a square sheet area, which are of the same lengths, and t is the thickness of the sheet. The unit is measured as ohms / square (Ω□).

The substrates suitable for the method of the invention is not limited to a certain type of paper or cellulose, and includes also other cellulose-based substrates, based on any type of fibrous cellulose. The invention is not applicable, however, to substrates from plastics or polymers, such as films made from regenerated cellulose, or to films or papers made of or comprising more than 50 wt% so-called micro- or nano-fibrillar cellulose (MFC or NFC) or to papers having layers or coatings comprising more than 50 weight-% of MFC or NFC.

To be suitable for the final barrier-coating step by means of a vapour deposition coating process, the cellulose-based substrate needs to be thin and have a grammage of from 30 to 70 g/m², such as from 30 to 60 g/m², such as from 35 to 50 g/m², such as from 35 to 45 g/m², as measured according to ISO 536:2012, and have a density from 800 kg/m³ to 1400 kg/m³, such as from 900 to 1400 kg/m³, such as from 950 to 1400 kg/m³,as measured according to ISO 534:2011. For reasons of efficiency and production economy and to avoid blistering of the coating, due to air or moisture being entrapped in a fibrous, porous cellulose-based substrate, during coating and drying operations, a cellulose-based substrate having a high density combined with a rather low weight and low thickness may be needed. On the other hand, cellulose-based substrates with a lower grammage than 30 g/m² may be mechanically too weak and/or less dimension stable, when they are coated with wet dispersions and subsequently dried, thus exhibiting shrinkage or curling problems.

It is thus more preferred to use cellulose-based substrates having a grammage of from 30 to 50 g/m², such as most preferable from 35 to 45 g/m², and a density from 900 kg/m³ to 1400 kg/m³.

The thickness of the cellulose-based substrate may be from 35 to 65 µm, such as from 35 to 60 µm, such as from 35 to 50 µm, such as from 35 to 45 µm. It has been seen that for some uses, such as for liquid-tight packaging of wet or liquid or viscous products, it may also be advantageous to use an as thin as possible high-density paper substrate, because less polymer may be needed in adjacent liquid-tight or heat-sealable layers at maintained integrity of the package and its heat seals.

Papers or cellulose-based substrates suitable of the invention may have a roughness of its surface to be coated (top side or print side) lower than 200 ml Bendtsen, such as 180 ml/min Bendtsen or below, such as 150 ml/min Bendtsen or below, such as 130 ml/min Bendtsen or below, such as 120 ml/min or below, such as 100 ml/min or below, such as 80 ml/min or below, such as 50 ml/min or below, such as 30 ml/min or below, such as 25 ml/min or below, as measured according to ISO 8791:4.

If the surface roughness, measured as Bendtsen value in ml/min, is too high, there may be "valleys" and "peaks" in the surface of the cellulose-based material, such that thinly applied wet coating of an aqueous solution of the gas barrier polymer, will not be able to fill and level out the "valleys" and still also cover the "peaks". In such cases, the applied and dried coating of gas barrier polymer will not be fully covering the surface, but have defects, through which oxygen gas molecules can easily permeate through the coating. Accordingly, the contribution of gas barrier properties from such a defective and insufficient barrier coating will be reduced significantly. A rougher substrate surface naturally requires more polymer coating to be applied, which is possible to apply at lower coating line speeds. At high coating speeds, however, there are limits to how much aqueous coating may be applied, to how much water may be evaporated in a drying operation and to how high viscosity and solid content the aqueous barrier polymer solution can have.

In an embodiment, a surface roughness below 200 ml/min Bendtsen, such as below 120 ml/min Bendtsen is preferred, such as lower than 100 ml/min, such as lower than 80 ml/min, such as lower than 50 ml/min, such as lower than 30 mil min, such as lower than 25 ml/min, to work better for barrier coating at industrially viable, high-speed operations. At below 30 ml/min, the substrate surface is really smooth and a very thin coating of 0.5 g/m² of a thermostable polymer or composition may be applied at high speed, and can still entirely cover and coat the surface.

Accordingly, a base-coated paper or cellulose-based substrate may have a further lower roughness than the substrate itself, such as 180 ml/min Bendtsen or below, such as 150 ml/min Bendtsen or below, such as 130 ml/min Bendtsen or below, such as 120 ml/min or below, such as 100 ml/min or below, such as 80 ml/min or below, such as 50 ml/min or below, such as 30 ml/min or below, such as 25 ml/min or below, as measured according to ISO 8791:4.

Good cellulose-based substrates may further have a Cobb 60 surface water absorption value of 30 g/m² or lower, as measured according to ISO 535:2014, on its coating side ("top side" or "print side"), for the purpose of functioning well in coating methods for industrially manufacturing of the barrier-coated structures according to the present invention, under viable high-speed conditions.

The Cobb 60 method according to ISO 535:2014 measures the water absorption of the cellulose-based substrate under standardised conditions, and is in a way a measure of "coatability" of the cellulose-based substrate surface, i.e. the ability to be coated by an aqueous solution composition of a gas barrier polymer. If the surface can absorb too much of the solution before drying, the thinly applied wet coating will be broken and can not form a continuous coating of the gas barrier polymer. Accordingly, it is preferred that the Cobb 60 value is lower than 30 g/m², such as lower than 28 g/m², and preferably not higher than 25 g/m².

The surface of the top side of the cellulose-based substrate may thus preferably exhibit a Bendtsen roughness value lower than than 30 ml/min and a Cobb 60 absorption value of 25 g/m² or lower.

In a further embodiment, the surface of the top side of the paper- or cellulose-based substrate may exhibit a Gurley porosity value greater than 1000 s/dl, such as greater than 2000 s/dl, according to Tappi T460 om-2. The advantage of the surface having a low porosity is that less aqueous solution of the gas barrier polymer will be absorbed into the cellulose-based substrate. Since a dispersion coated aqueous composition of the base coating may be very thin, this may be important for the internal coherence of the coating as well as for the ability of the coating to form a smooth and even surface for receiving further coatings or layers there onto.

Thus, in a cellulose-based substrate suitable to be coated with a thin coating of an aqueous solution composition comprising an oxygen barrier polymer, the number and the size of pores in the substrate material should preferably be significantly reduced. By extensive refining of the pulp used for manufacturing of the substrate, the degree of fibre bonding will increase and thus reduce the porosity. Greaseproof paper is produced by such extensive refining and has sufficiently low porosity to provide a grease barrier.

Greaseproof paper has thus also been seen as a potential substrate or carrier for an additional gas-barrier coating. The resulting pulp has, however, high dewatering resistance and demands long time for stock dewatering and is both costly in its manufacturing process and undesired in repulping and recycling processes. The same is valid regarding parchment papers, which in their manufacturing acquire gelatinized fibres by passing a bath of sulphuric acid, which makes the fibres less dewaterable and repulpable, and moreover the parchment papers acquire undesired brittleness. The same is further true also for papers or films comprising more than 50 weight-%, i.e. a majority of fibrillar cellulose, such as MFC or NFC. The inclusion of fibrillar cellulose into the cellulose-based substrate makes it less advantageous in repulping processes in order to recycle cellulose fibres, i.e. in the fibrous form, from the laminated materials comprising the paper or cellulose-based substrate.

According to an embodiment, the cellulose-based substrate for the use of the invention, may be formed from cellulose fibres comprising at least 50% by dry weight of chemical pulp, such as Kraft pulp or sulphite pulp. Sulphate or sulphite pulp is used to obtain a paper that is tough enough for downstream processes, such as coating at high line speed, but also converting lamination and use of the final package.

Sulphate/kraft pulp may be preferred since it is widely produced in large quantities and is advantageous for improved repulping in recycling, and general dewatering of the fibres. Sulphite fibres normally have a higher proportion of refined fibres, which may have an effect slightly to the contrary depending on how high the proprtion is and on the degree of refinement. According to an embodiment of the invention, Kraft pulp may thus be preferred.

The cellulose-based substrate may be formed from cellulose fibres comprising 35-100 %, such as 35-80 %, such as 40-70 % of softwood pulp, by dry weight of the pulp used to form the high-density paper. The other part of the pulp composition may comprise hardwood fibres and some low amounts of other fibres.

A benefit of including softwood pulp is an improved runnability in the paper machine and beneficial strength/toughness properties in the resulting paper. A relatively high proportion of softwood pulp may facilitate sufficiently high density of the cellulose-based substrate without causing problems in dewatering during the manufacturing of the substrate as well as enabling repulping in recycling operations. The degree of refinement of the fibre compositions is further chosen to promote both dewatering and repulping abilities, and at the same time the formation of a dense paper with lower porosity.

Thus, whereas some substrate papers exist, which have inherent, good oxygen barrier properties, those are for other reasons, such as low recyclability (repulpability), less preferred for the final materials, and there is a need to be able to provide a major contribution of oxygen barrier properties by coating materials, to be applied and well bonded to, and well interacting with, the substrate surface.

To have good mechanical properties for coating at high coating line speeds above 300 m/min, such as at above 400 m/min, the cellulose-based substrate may have a tensile strength from 3 to 6 KN/m in the MD (machine direction) and from 1.5 to 3.5 KN/m, in the CD (cross direction). In the present disclosure tensile strength is measured according to ISO 1924-3:2005. A higher tensile strength may thus indicate a paper substrate, useful to withstanding web handling forces during coating and lamination operations.

The cellulose-based substrate may further have a tensile strain from 1.4 to 3.5 % in the machine direction and from 2.1 to 6.0 % in the CD.

The cellulose-based substrate may further have a tensile energy from 35 to 90 J/m² in the MD and from 37 to 140 J/m² in the CD.

Further, the E Modulus of the cellulose-based substrate may be from 9500 to 12500 MPa in the MD, and from 4000 to 7000 MPa in the CD.

Preferably, the beneficial barrier and recycling properties are obtained without sacrificing tensile strength and other mechanical properties.

It has previously been seen that a vapour deposited coating, such as a metallised coating, coated to mere nanometer thickness, first requires a thin but defect-free base coating or pre-coating of a smoothening polymer applied onto the paper or cellulose-based substrate, in order to provide barrier properties and/ or good sheet resistance in a metallisation coating. A well functioning such polymer for a base coating may be selected from vinyl alcohol polymers and copolymers, which also have inherent gas barrier properties, and which are food safe and environmentally sustainable both regarding recyclability and in industrial coating and lamination processes. Such polymers are water dispersible and/or dissolvable in water and are applied by means of an aqueous "dispersion coating" process, or a so called "liquid film coating" process. A polymer that has a good smoothening effect is starch or modified starch. Generally, however, starch materials have significantly lower gas barrier properties, than for example PVOH.

For the purpose of high-frequency induction heat sealing, it has recently been understood that starch materials work significantly better as base coatings for receiving an induction-susceptible metallisation layer. Starch materials seem to provide better thermo-mechanical stability in heat sealing operations, but also have a significant smoothening effect such that the initial roughness of substrate surfaces may be less crucial for the quality of subsequently applied thin barrier and metal coatings.

Suitable starch materials for such base coatings may be oxidised or modified starches suitable for aqueous dissolution at cold or ambient temperature, such as oxidised native potato starch or the like, because such cold water dissolved starches do not form gels in production. Examples of such suitable starch materials are Etenia^{®} or Solvicol^{®} 1290 from Avebe, the Netherlands.

The base coating layer may be applied as one single coating or as two consecutive thinner coatings.

Other polysaccharide materials may also function well as base coatings, with slightly adapted application, coating and drying conditions. Other such conceivable materials suitable to be comprised in the base coating may be thin coatings of readily dispersion- or solution-coatable cellulose ether materials. Cellulose ether materials may also have smoothening properties when applied onto less smooth paper or paperboard surfaces, such that they can provide for a high quality, subsequent vapour deposited coating of metal. Cellulose ethers are not known to provide oxygen barrier properties, however, and are accordingly less preferred than starch materials for the base coating. Suitable cellulose ether materials may comprise one or more compounds selected from the group consisting of methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC.

The composition of the base coating may further comprise inorganic particles or filler material, such as talcum, kaolin and nanoclays, such as bentonite, montmorillonite and the like. The amount of such inorganic material may be from 1 to 40 weight-%, such as from 1 to 30 weight-%, such as from 1 to 20 weight-%, such as from 1 to 15 wt-% of the composition of the base coating, based on solid content.

The aqueous solution of the base coating composition may be applied evenly onto the surface of the top side of the web of the cellulose-based substrate by means of a roll coating method to provide a coating at an amount from 0.3 to 2 g/m², dry weight. Below 0,3 g/m2, the starch will provide less of a smoothening effect to the cellulose substrate surface, while above 2, or even 1.5 g/m², the coating will be more difficult to dry and takes more energy and time for evaporating the water from the starch. A good smoothening effect is achieved by starch at 0,5 g/m² and above, and a good balance between coating layer quality and cost efficiency, is achieved at coating layers from 0,5 to 0.8 g/m². Often, a thicker coating of the starch material is desired in total, and thus at least one further coating step is added after the drying of a first coating layer has been completed.

Thus, the base coating may be applied in two consecutive steps with intermediate drying, as two part-layers. When applied as two part-layers, each layer is suitably applied in amounts from 0,2 to 1 g/m², such as from 0,2 to 0.8 g/m², such as from 0,5 to 0.7 g/m², dry weight, and allows a higher quality total layer from a lower amount of liquid base coating material composition.

Two part-layers of starch may thus be applied at an amount of from 0,2 to 1 g/m² each, but since the starch base coating can provide a very good smoothness coating by only a single coating, the metal coating may obtain sufficiently good quality by only one such base coating. Consequently, thanks to the smoothness and high quality of the metal coating applied onto the starch base coating, it seems to be also sufficient to apply only one single gas barrier coating as a top coating and still obtain very good gas barrier properties altogether, and good high-frequency induction heat sealing capability.

Next, the barrier-coated cellulose-based of the invention comprises a step of vapour depositing a metal coating onto the first applied base coating, obtained from the applied and dried aqueous solution of the thermostable polymer, by means of physical vapour deposition (PVD).

In the method of the invention, the physical vapour deposition coating is a metallisation coating, preferably an aluminium metallisation coating.

Such thin vapour deposited metal coating layers are nanometer-thick, i.e. they have a thickness that is most suitably counted in nanometers, for example of from 5 to 500 nm (50 to 5000 Å), such as from 5 to 200 nm, more such as from 5 to 100 nm, such as from 5 to 50 nm.

Generally, below 5 nm the barrier properties may be too low, and the metallisation coating will have too high sheet resistance for the purpose of induction heating, and above 200 nm, such as at 100 nm and above, such as above 80 nm, such as above 50 nm, depending on the quality of deposition coating, the barrier coating may be less flexible and, thus, more prone to cracking when applied onto a flexible substrate and would also cost more since the deposition coating speed has to be lowered.

In an embodiment, regarding flexibility of the coated metallization coating and regarding coating operational efficiency, the metal deposition coating is applied to a thickness of from 10 to 200 nm, such as from 10 to 150 nm, such as from 10 to 100 nm, such as from 10 to 95 nm, such as from 10 to 80 nm, such as from 10 to 50 nm, which corresponds to less than 1 - 3 % of the aluminium metal material present in an aluminium foil of conventional thickness for packaging, such as 6-9 µm.

While vapour deposition metal coatings require significantly less metal material than a foil of metal, they only provide a low level of oxygen barrier properties, at most, and need to be combined with a further gas barrier material in order to provide a final laminated material with sufficient barrier properties. On the other hand, it may complement a gas barrier layer like PVOH or EVOH, which does not provide water vapour barrier properties and is rather sensitive to moisture.

Other examples of vapour deposition coatings are aluminium oxide (AlOx, Al₂O₃) and silicon oxide (SiOx) coatings. Generally, such PVD-coatings may be more brittle and less suitable for incorporation into packaging materials by lamination, while metallised layers may get better suited mechanical properties for lamination material despite being made by PVD.

Normally, an aluminium metallised layer also inherently has a thin surface portion comprising aluminium oxide, which is usually and inherently formed towards the end of the metallisation coating process.

An aluminium metallization coating may be applied by physical vapour deposition to a sheet resistance value of from 0.25 to 0.75 Ω□, such as from 0.4 to 0.6 Ω□. For the purpose of induction heat sealing, the sheet resistance of the metallization coating should be as low as possible, but there is a practical lower limit to what is possible. An optimal level has so far been found at about 0.5 up to 0.75 Ω□.

For the PVD coating process to work optimally, the moisture content in the paper or cellulose-based substrate should be kept at from 4 to 8 %. If the paper substrate becomes too dry, it may curl its longitudinal edges toward each other and cause coating and handling problems in the method of the invention. If the moisture content becomes too high, on the other hand, the vapour deposition coating operation may not function properly to provide a high-quality coating.

In an embodiment, an aluminium metallised layer is applied to an optical density (OD) of 1.8 or above, such as from 1.8 to 4, such as from 2 to 3.5, such as from 2.5 to 3.5. At an optical density lower than 1.8, the barrier properties of the metallised film may be too low and at an OD lower than 2.0, the sheet resistance may be too high. At and OD above 4, the deposited metal layer may become more sensitive to mechanical stress and less flexible, thus forming cracks or defects which may in turn impair oxygen barrier properties as well as induction heat sealing properties.

The metal coating may in some embodiments be deposited as two consecutive deposition coatings, for increased quality and flexibility.

The optical density is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD.

In lab measurements, a spectrophotometer may alternatively measure the light transmission over the full visible spectrum (380-800 nm). The optical density is calculated from the light transmission (T) value at 560 nm, according to a formula OD= -log₁₀ (I₁/I₀) and the values obtained are equally accurate (+/- 0.2 OD) and comparable to light transmission densitometer values.

The metallisation coating is further coated with a thin aqueous solution composition comprising a gas barrier polymer. The gas barrier polymer needs to also exhibit some thermostability during induction heat sealing, such that it does not melt or deteriorate, whereas an adjacent heat sealable material layer should. Thus, the gas barrier polymer may have a melting point which is higher than that of the material to be molten and heat sealed. The gas barrier polymer of the aqueous solution composition for the top coating may suitably be a polymer or copolymer based on on vinyl alcohol monomers, such as selected from polyvinyl alcohol (PVOH), ethylene vinyl alchol copolymer (EVOH), and modified PVOH and EVOH copolymers which can form aqueous solutions. Such polymers have for example been modified in some cases by addition of carboxylic functional groups.

In an embodiment, the water soluble gas barrier polymer is PVOH, such as a PVOH of the type Poval^{®} from Kuraray, which provide good film formation properties, gas barrier properties, cost efficiency, food compatibility and odour barrier properties.

In another embodiment, the gas barrier polymer is a water soluble EVOH having a low content of ethylene monomer, such as an EVOH of the type Exceval^{®} from Kuraray. The advantage of using an EVOH polymer as gas barrier material is that the ethylene content supports resistance to humidity, such that the oxygen barrier properties are better maintained also at higher relative humidity, such as at 80 % RH. This is in particular relevant to the packaging of oxygen. sensitive liquids, such as in carton laminate packaging of liquid food.

Conventional EVOH polymers, are normally intended for extrusion and are not possible to disperse or dissolve in an aqueous medium in order to produce a thin liquid film coated barrier film of 4 g/m² or below. A water soluble EVOH comprises a higher amount of vinyl alcohol monomer units to be water-dispersible and the properties are close to those of liquid film coating grades of PVOH as possible. Also, such a water soluble EVOH exhibits a melting point which is higher than that of the material layer to be heat sealed, and accordingly is sufficienty thermostable for supporting the metallization coating and enduring an induction heat sealing operation.

An extruded EVOH layer, on the other hand, is not an alternative to a liquid film coated EVOH, because it inherently has less similar properties to PVOH than EVOH grades for dispersion/ solution coating, and because it cannot be applied in an efficient manner by melt extrusion coating or melt extrusion lamination to attain sufficient adhesion to adjacent layers. Melt coextrusion coating together with polyethylene and ethylene-based tie layer polymers would be technically difficult to carry out due to differences and incompatibility regarding melt viscosities.

A PVOH-based gas barrier composition performs best when the PVOH has a degree of saponification of at least 98 %, preferably at least 99 %, although also PVOH with lower degrees of saponification will provide oxygen barrier properties. A most advantageous quality and grade of PVOH for the method of the invention is Poval^{®} 6-98.

In a further embodiment, the PVOH may be a Poval^{®} 15-99.

In yet another embodiment, the PVOH may be a Poval^{®} 6-96, although the oxygen barrier provided by this grade may be a little lower.

Suitable EVOH grades to be coated in the method of the invention may be Exceval^{®} 4104 AQ, which has similar coatability properties to Poval^{®} 6-98, and Exceval^{®} HR-3010, which has similar coatability properties to Poval^{®} 15-99.

A possible additive in the barrier top coating composition may be a polymer or compound with functional carboxylic acid groups, for the purpose of improving the water vapour and oxygen barrier properties of a PVOH top-coating and in particular to improve the adhesion of the top-coating to the metallised coating on the surface of the coated paper substrate. Suitably, such polymer with functional carboxylic acid groups is selected from among ethylene acrylic acid copolymer (EAA) and ethylene methacrylic acid copolymers (EMAA) or mixtures thereof. An EAA or EMAA copolymer may be included in the barrier top coating in an amount of from 1 to 49 weight-%, such as from 1 to 40 weight-%, such as from 1-35 weight %, such as from 1 to 30 weight-%, such as from 1 to 25 weight-%, such as from 1 to 20 weight-%, such as from 1 to 15 weight-%, based on dry coating weight.

In an embodiment, the top coating may be applied as two consecutive layers, wherein the first coating layer comprises a higher proportion of EAA adhesive polymer, and the remainder being PVOH, while the second coating layer comprises a major proportion of PVOH, or PVOH only. Accordingly, both good adhesion to the metallisation surface and good gas barrier properties may be provided at optimal level by the top coating layers.

In one embodiment, such a barrier layer mixture may essentially consist of PVOH, EAA and an inorganic laminar compound, such as comprising from about 1 to about 10 weight %, based on dry coating weight, of an inorganic laminar compound, such as talcum, kaolin or exfoliated nanoclay particles, such as bentonite.

Thus, while it is more preferable to use a barrier top coating from a pure PVOH or EVOH composition, advantageous results may be obtainable also with gas barrier coatings comprising further additives as described above.

The aqueous solution of the gas barrier polymer of the top coating may be applied evenly onto the surface of the top side of the web of the metallised cellulose-based substrate by means of a roll coating method to provide a coating at an amount from 0.5 to 2 g/m², preferably from 0.5 to 1.5 g/m², dry weight. Below 0,5 g/m², insufficient gas barrier properties may be achieved, while above 2 g/m², the coating may not bring cost-efficiency to the packaging laminate, due to high energy cost and the short time available (because of high coating line speed) for evaporating the water. A recognisable level of oxygen barrier is achieved by PVOH at 0,5 g/m², and above, and a good balance between barrier properties, coating layer quality and cost, is achieved at coating layers from 0,5 and 2 g/m². Often, a thicker coating of the gas barrier polymer is desired in total, and thus at least one further coating step is added after the drying of the first coating layer has been completed.

Accordingly, a thermostable gas-barrier top coating may be applied in two consecutive steps with intermediate drying, as two part-layers. The two part-layers may have different compositions or blending ratios of the vinylalcohol based polymer and other polymers and additives. When applied as two part-layers, each layer is thus suitably applied in amounts from 0,2 to 1,5 g/m², such as from 0,2 to 1 g/m², dry weight, and allows a higher quality total layer from a lower amount of liquid gas barrier composition. Two part-layers of PVOH may thus be applied at an amount of from 0,25 to 1 g/m² each, such as from 0.3 to 0.8 g/m² each, such as from 0.5 to 0.8 g/m² each.

Also the starch base coatings may be applied as two such consecutive coatings, with intermediate drying, but since a base coating of starch can provide a very good smoothening coating by only one single coating, the metal coating will obtain sufficiently good quality by only one such base coating. Furthermore, thanks to the smoothness and high quality of the metal coating applied onto the starch base coating, it seems to be further sufficient to apply only one single gas barrier coating as a top coating and still obtain very good gas barrier properties and high-frequency induction heat sealing capability.

The thermostable gas-barrier top coating composition may further comprise a low amount, such as from 1 to about 20 weight %, such as from 1 to about 15 weight %, based on dry coating weight, of an inorganic laminar compound, such as talcum, kaolin or exfoliated nanoclay particles, such as bentonite. In such cases, the barrier layer may include from about 99 to about 90 weight % of the polymer based on the dry coating weight.

The amount of applied wet coating may be approximately ten times higher than the applied and dried solid target coating, thus the amount of applied wet coating of starch or PVOH respectively, is from about 5 to about 20 g/m², such as from 5 to about 10 g/m², which thus explains that quite some grammage of water needs to be evaporated in the drying steps, at the high coating speed. It is important that not too much moisture remains on the coated substrate or is absorbed into the substrate, because the moisture may disturb any later steps in subsequent coating and lamination operations, to cause defects in the barrier coatings applied, thus jeopardizing the coating quality and ultimately decreasing the advantageous properties to be provided by the barrier-coated substrate.

Industrially viable, i.e. high-speed, methods suitable for application of the base coating and the aqueous polymer solution compositions for the thermostable gas-barrier top coating of the invention may broadly be any suitable wet roll coating methods, such as rotogravure roll coating, smooth roll coating, and reverse roll or gravure coating. In an advantageous embodiment of the method of the invention, the aqueous solution composition of a polymer is applied by means of reverse gravure coating. The reverse direction of the gravure coating method has proven to better facilitate the smoothening of the coated surface, in comparison to the forward direction gravure coating, which rather functions as a printing method of the gas barrier polymer onto the surface than as a full coating method.

The solid content of the water soluble polymer should be from 5 to 15 weight-%, in order to suit a roll coating application method, and may be adjusted to a suitable solid content dependent of the choice of polymer and the coating speed. The solid content in the method of the invention is more suitably from 7 to 13 weigth-%, such as from 9 to 13 weigth-%, such as preferably from 10 to 12,5 weight-%. At a solid content of 10 % of just above, it proved that the best quality coatings, i.e. even and smooth and substantially without defects in the coatings, were obtainable by the reverse gravure coating method.

The viscosity of the aqueous solution of the starch base coating or the PVOH gas barrier polymer to be coated should be from 10 to 120 mPa*s, such as from 50 to 100 mPa*s. This allows for optimal pick-up of the gas barrier solution by a gravure roller and further transfer onto the substrate surface, at high line coating speeds above 300 m/min, such as at 400 m/min and above, such as at 600 m/min.

An additive, such as a dispersion stabiliser or the like, may also be included in the gas barrier composition, preferably in an amount of not more than about 1 weight % based on the dry coating. The total dry content of the composition is preferably from 5 to 15 weight-%, more preferably from 7 to 12 weight-%.

The aqueous solution composition of the base coating or the thermostable gas-barrier top coating may be heated and applied at a temperature from 60 to 80 degrees Celsius. By heating to such a warm temperature, the risk for formation of foam bubbles in the coating is reduced.

To further reduce bubble- or foam-formation in the aqueous polymer solution, a defoaming additive may be added. A preferred defoaming agent is n-octanol, which is both food safe and proved to provide a better effect at low amounts, than other tested agents, such as at a low amount from 0.01 to 0.1 weight-%, such as at about 0.05 weight-%, of the solution. Other tested agents were noted to deteriorate PVOH, such that they increased the OTR of the applied and dried PVOH coatings.

It is advantageous to dry consistently at low temperatures only, as the wet coatings of aqueous solution of gas barrier polymer are very thin and may be damaged by too forcefully applied heating.

The drying step may be carried out by a hot air dryer, which also allows the moisture to evaporate and be blown away from the surface of the substrate by the air convection. The substrate temperature may be kept constant at a temperature lower than 95 °C, such as lower than 85 °C, such as at from 75 to 85 °C, such as at about 80 °C, as it travels through the dryer. The drying may be partly assisted by irradiation heat from infrared IR-lamps, if needed at high lines speeds, in combination with hot air convection drying.

The more water that is added by the wet applied coating, the more has to be evaporated in the dryer at the high line speed. There is a balance between how high solid content there may be in the aqueous coating to reach a dry thin coating of only 1-2 g/m² versus the length of the dryer sections. The speed of drying may not be too rapid, due to the risk of skin formation, and it may not be too slow, due too high absorption into the paper leading to lower film thickness on the surface and/or a broken coating (having defects). The evaporation of the water should thus be controlled to avoid too high temperature of the surface of the substrate as well as skin formation.

Such balanced settings may be unique for each coating line and /paper/coating combination.

The barrier coated paper or cellulose-based substrate obtained according to the method of the invention, provides excellent low OTR and surprisingly shows also resistance to deterioration (i.e. no or very low increase) of the low OTR from high relative moisture content of 80 % (RH), although the gas barrier coating is positioned on the inside of the metallisation coating in a laminated packaging material, such that it is more exposed to migration of water vapour from a liquid or wet product in a filled packaging container. Thus, it proves unexpectedly high suitability for lamination into a laminated packaging material and further for the fold-forming and sealing operations of such a laminated material into packages.

The laminated packaging material comprising the barrier-coated cellulose-based substrate, further comprises a first outermost protective material layer and a second innermost liquid tight, heat sealable material layer. The second innermost liquid tight, heat sealable material layer may comprise a thermoplastic polymer, such as a polyolefin polymer or be made of a polyolefin polymer. The first outermost protective material layer may be transparent, to enable visibility of a printed décor pattern on the outside of the bulk layer. It may also comprise a thermoplastic polymer, such as a polyolefin polymer or be made of a polyolefin polymer.

A carton-based laminated packaging material for liquid food packaging may further comprise a bulk layer of paper or paperboard, a first outermost, protective material layer, a second innermost liquid tight, heat sealable material layer, and, arranged on the inner side of the bulk layer of paper or paperboard, towards the inside of a packaging container made from the packaging material, between the bulk layer and the second innermost liquid tight, heat sealable material layer, said barrier-coated paper or cellulose-based substrate.

In an embodiment, the carton-based laminated packaging material may thus comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost liquid tight, heat sealable polyolefin layer, said barrier-coated paper or cellulose-based substrate.

A paper or paperboard bulk layer for use in the invention usually has a thickness of from about 70 µm up to about 600 µm, and a surface weight of approximately from 65 to 500 g/m², such as from 100-400 g/m², preferably from about 200 to 300 g/m², and may be a conventional paper or paperboard of suitable packaging quality.

In the case the resulting laminated material is to be used as a pouch package, thinner paper layers may be used for the barrier-coated paper substrate and the bulk layer, which then together create the bulk strength or stability of the paper laminate. In such cases, the additional "bulk" paper has a grammage from 40 to 64 g/m², such as from 40 to 55 g/m², and the barrier-coated paper substrate may have a grammage weight from 40 to 55 g/m².

For low-cost aseptic, long-term packaging of liquid food, a thinner packaging laminate may be used, having a thinner paper core layer. The packaging containers made from such packaging laminates are not fold-formed and are more similar to pillow-shaped flexible pouches. A suitable paper for pouch-packages usually has a surface weight of from about 50 to about 140 g/m², preferably from about 70 to about 120 g/m², more preferably from 70 to about 110 g/m². As the barrier-coated paper or cellulose-based substrate of the method of the invention in itself may contribute with some stability to the laminated material, the paper layer corresponding to a "bulk" layer may be even thinner, and interact with the barrier-coated cellulose-based substrate ni a sandwich interaction to still produce a laminated packaging material having the desired mechanical properties altogether.

The barrier-coated paper or cellulose-based substrate may be bonded to the bulk layer by an intermediate adhesive, or thermoplastic polymer bonding layer, thus binding the un-coated surface of the barrier-coated paper to the bulk layer. According to an embodiment the bonding layer is a polyolefin layer, such as in particular a layer of a polyethylene-based polyolefin copolymer or blend, including in the majority ethylene monomer units. The bonding layer may bind the bulk layer to the barrier-coated cellulose-based substrate by melt extrusion laminating the bonding polymer layer between a web of the bulk layer and a web of the cellulose-based substrate, and simultaneously pressing the three layers together while being forwarded through a lamination roller nip, thus providing a laminated structure by extrusion lamination.

In another embodiment, the barrier-coated cellulose-based substrate may be bonded to the bulk layer by wet application of an aqueous dispersion of an adhesive composition comprising an adhesive polymer binder onto one of the web surfaces to be laminated and pressing the two paper webs together while they are forwarded through a lamination roller nip, thus providing a laminated structure by wet lamination. The moisture of the aqueous adhesive composition is absorbed into the fibrous cellulose network of the two cellulose-based layers, and partly evaporating with time, during the subsequent lamination processes. There is thus no need for a forced drying step.

The aqueous adhesive polymer binder may be selected from the group consisting of acrylic polymers and copolymers, starch, starch derivatives, cellulose and polysaccharide derivatives, polymers and copolymers of vinyl acetate and vinyl alcohol, and copolymers of styrene-acrylic latex or styrenebutadiene latex. For best possible environmental and sustainability profile, adhesive binders originating from plants or non-fossil sources are preferred.

Suitable thermoplastics for outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the first, outermost, protective and liquid-tight layer is an LDPE, while the second, innermost heat sealable, liquid-tight layer is a blend composition of m-LLDPE and LDPE for optimal lamination and heat sealing properties.

The same thermoplastic polyolefin-based materials, as listed regarding the first, outermost and the second, innermost layers, and in particular polyethylenes, are also suitable as bonding layers in the interior of the laminated material, i.e. between a bulk or core layer, such as paper or paperboard, and a barrier film or sheet. In an embodiment, the thermoplastic interior bonding layer may be a polyolefin layer, such as a polyethylene layer, such as a low density polyethylene (LDPE) layer.

In a further embodiment, the second innermost liquid tight, heat sealable polyolefin layer is a pre-manufactured film comprising the same or similar polyolefins as described above, i.e. LDPE, LLDPE and/or m-LLDPE, such as a biaxially oriented film comprising at least one layer with a majority of an LLDPE polymer, for improved robustness of the mechanical properties of the packaging material. Due to the manufacturing process in film blowing and film casting operations, and optional subsequent film orientation operation steps, the polymers of such films acquire different properties from what is possible from (co-) extrusion coated polyolefin layers. Such a pre-manufactured, preferably oriented, polymer film may contribute significantly to the mechanical robustness of a laminated packaging material and to mechanical strength and package integrity of formed and filled packaging containers from the laminate packaging material.

According to an alternative embodiment, suitable bonding or tie layers in the interior of the laminated material, such as for example between the bulk or core layer and the barrier-coated cellulose-based substrate, or between the outer heat sealable layer and the barrier-coated paper substrate, are also so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

A laminated packaging material made according to the above provides good integrity when transformed into filled packaging containers, by good adhesion and interaction between the adjacent layers within the laminated construction and by providing good quality of the gas barrier coating and the vapour deposition barrier coating. Especially, for the packaging of liquids, and wet food, it was an important conclusion that the inter-layer adhesion within the laminated packaging material, as well as the oxygen gas barrier properties, may be maintained also under wet packaging conditions.

According to further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by the barrier-coated cellulose-based substrate and the laminated packaging material comprising it, as defined by the invention, thanks to the improved barrier properties provided. The laminated packaging material structure works better for the forming into fold-formed packages, both from the improved adhesion between the substrate and the barrier material coatings and from the improved contribution to gas barrier properties from the barrier-coated substrate itself, which likely also is due to the good combined cohesion and adhesion of the barrier coating layers to the surface of the barrier-coated cellulose-based substrate.

### Examples and description of preferred embodiments

In the following, preferred embodiments of the invention will be described with reference to the drawings, of which:
Fig. 1 schematically shows in cross-section an example of a gas- as well as water-vapour barrier-coated cellulose-based substrate, made by the method according to the invention,
Fig. 2 shows a schematic, cross-sectional view of a laminated packaging material, comprising the barrier-coated cellulose-based substrate of Fig. 1,
Fig. 3a shows schematically a method, for dispersion coating an aqueous barrier coating composition onto a cellulose-based substrate,
Fig. 3b shows schematically a method, for melt (co-) extrusion coating layer(s) of a thermoplastic heat sealable and liquid-tigth polymer onto a web sustrate, to form innermost and outermost layers of a packaging laminate of the invention,
Fig. 4 is showing a diagrammatic view of a plant for physical vapour deposition (PVD) coating onto a web substrate, by using a solid metal evaporation piece,
Fig. 5a, 5b, 5c and 5d are showing typical examples of packaging containers produced from the laminated packaging material according to the invention,
Fig. 6 is showing the principle of how such packaging containers may be manufactured from the packaging laminate in a continuous, roll-fed, form, fill and seal process, and
Fig. 7a illustrates a cross-section of a transversally sealed tube of packaging material at the longitudinal seal, LS, overlap area as formed by folding the packaging material into a tube, and
Fig. 7b shows with a top view, how strong light shines through thinnings or defects in the metallisation coating at the LS area of the packaging material formed and sealed as shown by fig. 7a.

### Examples

As mentioned in the introduction, patent publication No. WO2011/003565A1 discloses a laminated, non-aluminium-foil packaging material comprising a base-coated and metallised Kraft paper substrate for the purpose of induction heat sealing of an innermost layer of a thermoplastic polymer directed towards the inside of a packaging container. It recommends in particular a base coating of PVOH and additional nano-clay particles in an aqueous composition, to obtain good gas barrier properties, and further to apply an aluminium metallisation PVD deposition coating thereon. For the base coating to work well for induction heat sealing of the laminated packaging material, the polymer or binder of the base coating has a higher melting point than the innermost thermo-sealable polymer layer. A number of equivalent or similar base coating polymers having an induction-heat durable effect were listed, i.e. starch, other polysaccharides, PVOH, water dispersible EVOH, polyvinylidene chloride.

From recent work, it has been seen, that a base coating of PVOH may not be the optimal choice among the listed examples for the purpose of induction heat sealing after all, and a present hypothesis is that PVOH may not be perfectly thermostable under severe induction heating conditions such that the metallisation layer does not remain sufficiently intact to enable a defect-free and tight seal. It was further seen that the power "window" within which also thicker materials may be induction heat sealeable, could be widened if instead starch would be used as the base coating for the metallisation, i.e. good induction heat sealing could be carried out both at lower and higher power settings.

### Examples

### Example 1

Different base coating materials were applied on a cellulose-based substrate and were tested regarding ability to heat seal by means of high-frequency induction heat sealing as well as regarding oxygen barrier performance.

Two different samples of barrier coated cellulose-based substrates were produced. In the first sample, a base coating of PVOH, i.e. Poval^{®} 6-98, from Kuraray was applied onto a paper substrate, having a density of about 950 kg/m³, a grammage weight of about 40 g/m² and a surface roughness lower than 200 ml/min Bendtsen. A base-coating of of PVOH was applied onto the substrate paper in the first sample, as two consecutive coatings of about 0.7 g/m².

In the second sample, a base coating of cold water soluble starch was applied onto the same paper substrate, as two consecutive coatings of about 0.5-0.6 g/m².

The two samples of base-coated paper substrates were further metallised by physical vapour deposition to a sheet resistivity in the metallisation coating of about 0.5 Ω□ (Ohms/ square), and subsequently laminated into a laminate structure having the principal structure:
// LDPE outside (12 g/m²)/ paperboard 80 mN/ bonding layer blend LDPE+mLLDPE (15 g/m²)/ barrier-coated paper substrate/ adhesive polymer EAA (6 g/m²)/ LDPE (13 g/m²)/ bi-axially oriented LLDPE film (18 µm) //

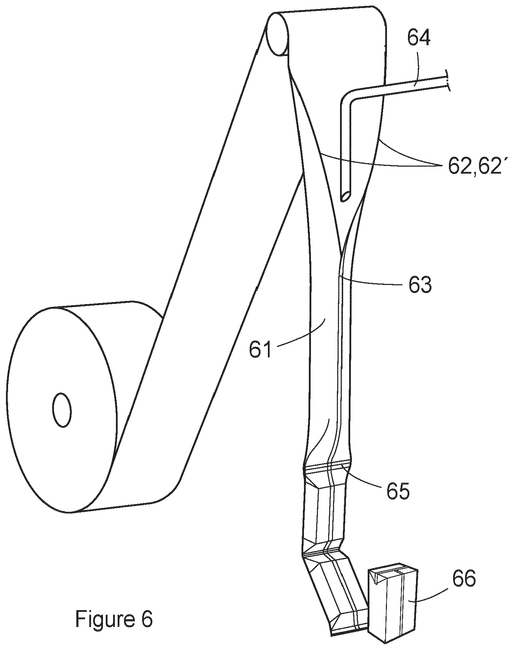

When forming a laminated packaging material into tube-formed packaging containers, as described in the introduction above and in connection to figure 6 below, the longitudinal edges of the web are continuously placed to form an overlapping longitudinal seal area and are thus joined to a longitudinally sealed "LS" area along the formed tube, by simultaneous application of heat and pressure. When applying the heat by high-frequency induction heating via the metallised aluminium layer, there may appear small defects in the form of tiny holes or inhomogeneities in the metallisation coating.

Furthermore, when reshaping the tube into individual packages, the tube is transversally sealed and the formed "pillows" of packages are cut off from the tube. As the longitudinal seal is further involved in (by crossing) the transversal sealing, there is a double overlap area created "LS-TS", which is prone to generate further defects during the heat sealing operation, due to the overlapping high thickness of materials in this area. Here, defects may occur in particular in connection to the longitudinal edges of the overlapping material, where the edges of the thicker paperboard cause significant stress on the adjacent and surrounding layers and coatings of materials, which are considerably thinner layers than the paperboard. The stresses are reinforced by the application of induced current and heat and pressure, such that defects emerge primarily in the metallisation coating at the location of the paperboard edges.

Fine marks, thinnings or crack initiations in the metallisation coating at the longitudinal edge positions of the laminated packaging material can be visible as lit-up marks by exposing the packaging material from this area to back-light, such as by placing the flat packaging material onto a lightbox with strong light.

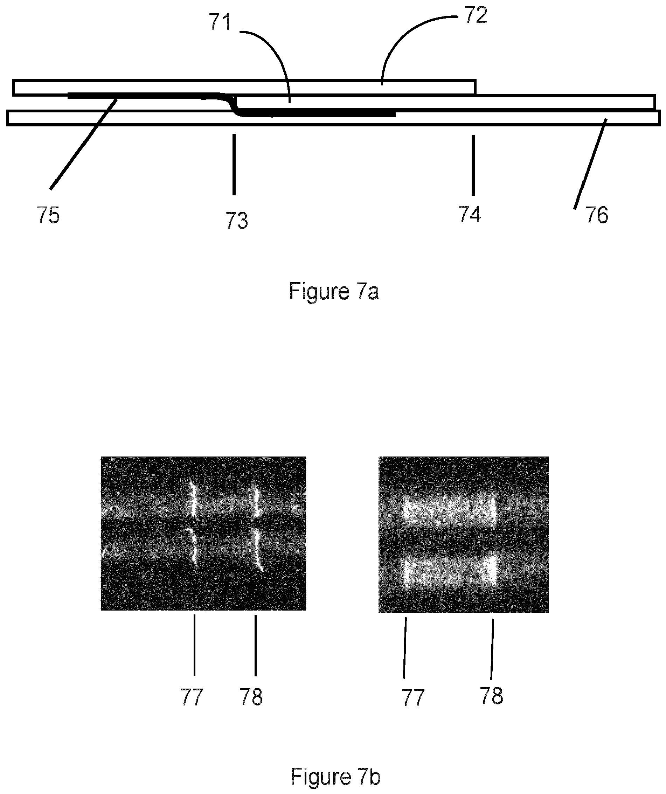

Fig. 7a shows a cross-section of the transversal seal area of the folded tube including the longitudinal overlap seal on the one side. Thus, it is shown how the longitudinal edges 71, 72 overlap each other, and the location of the most sensitive positions 73, 74 that may develop such light-marks in the metal coating at the transversal seal of the LS (longitudinal seal) area, i.e. at the LS-TS area. It is also shown how a longitudinal flat sealing strip 75 of polymer is arranged and sealed along one of the edges, i.e. the so-called "LS-SA" (meaning LS Strip Application) edge 73, to the inside polymer layers of the packaging material, to cover the otherwise exposed edge 73 of cut material of the overlap edge on the inside of the tube. As the tube is transversally sealed, the side having the LS overlap is sealed to the opposite side of the tube 76. Thus, the folded edges of the transversally sealed tube are outside the drawing and not shown here.

Fig. 7b shows the visible, rather large such light-marks 77, 78, thus corresponding to positions 73 and 74 in Figure 7a, seen when viewing the flat material against strong back-light. Even if the marks, would be much smaller, they may impact the quality of the heat seal negatively, as they disturb the induction heating process and may cause defective or uneven seal zones. The quality of the LS-TS area may be visually inspected regarding the occurrence of such marks, by means of backlight illumination.

The two laminated sample structures were each heat sealed to narrow strips of material in a pilot rig, to simulate the stresses at the overlap seal of laminated material at the longitudinal seal area (LS) under the conditions of a heat sealing operation in a filling machine.

The laminated material samples tested in this way were exposed to different high frequency induction power settings of 1500 W, 2000 W and 2500 W at a seal pressing force of 12 kN and during a time of 200 ms. The highest power setting of 2500 W was beyond realistic conditions, to stress the materials and the sealing operation further. The strips of heat sealable polymer material were of three different thicknesses and were applied and heat sealed to the inside of each sample of material, to evaluate the material robustness, at heat sealing at each of the three different power levels. The thicknesses of the strips varied between 0.25 and 0.5 mm.

To evaluate the seal and material quality in the most challenging part of the heat sealed packaging material, i.e. the LS-TS area, the sealed area was visually inspected and the number of visible light marks were noted at different power settings of the inductor for heating to seal the transversal seal. The resulting, visually identified number of marks in the metallisation coating at the LS overlap seal, at the different power levels, were noted in Table 1. Higher power levels and higher material thicknesses normally generate at least some visible marks, and a higher number of marks in the metallisation coating than at lower power and lower thicknesses, for any given material.

The two laminated sample structures were also fold-formed, filled and sealed into packaging containers filled with water in a filling machine. The oxygen transmission rate of packages (filled, emptied and dried) was measured according to ASTM F1307-14, at 0.2 atm (surrounding air containing 21 % oxygen). The unit is cm³/package/24h at conditions of 23 °C and 50 % RH.

For the OTR measurement, the package is mounted on a special holder and inside the package nitrogen is purged. The outside of the package is exposed to the environment surrounding the instrument. When oxygen permeates through the package into the nitrogen carrier gas, it is transported to the coulometric sensor. The sensor reads how much oxygen leaks into the nitrogen gas inside the package.

The numbers of visible marks noted at the LS-TS area, and the oxygen transmission of packages, made from laminated samples of the barrier-coated cellulose-based substrates described above, are presented in Table 1.

**Table 1**

| **SAMPLE:** | **Comparative Sample 1** | **Sample 1** |
|---|---|---|
| Cellulose-based substrate | HD paper | HD paper |
| Base Coating | 2 x PVOH | 2 x starch |
| Metallisation until Rs = 0.5 was reached | Metallisation | Metallisation |
| inside heat sealable polymer layer configuration | /EAA/LDPE/pre-manufactured film LLDPE/ (6/13/18) | /EAA/LDPE/pre-manufactured film LLDPE/ (6/13/18) |

| **EVALUATION:** | | |
|---|---|---|
| Number of marks in metallisation coating at LS overlap seal in transversal seal area (LS-TS); HFIH power level 1500 W | 0 | 0 |
| Number of marks in metallisation coating at the LS-TS seal area; HFIH power level 2000 W | 18 | 0 |
| Number of marks in metallisation coating at the LS-TS seal area; HFIH power level 2500 W | 28 | 3 |
| OTR package cc/package*24h, 0.2 atm O₂ at 23º C, 50 % RH | 0.028 | 0.216 |

Packages produced according to Comparative Example 1 had better oxygen gas barrier properties, and the measured oxygen transmission was higher (i.e. barrier to oxygen permeation was lower) regarding the barrier-coated sample having a base coating only of starch. On the other hand, the laminated material sample according to Example 1 produced fewer marks in the metallisation coating during the transversal induction heat sealing operation. The conclusion from these results, was that starch as a base coating provides better stability during the phase of applying heat for sealing of the inside polymers, especially at the sensitive areas where marks in a thin metallisation coating more easily may be generated. Starch is less preferred than PVOH from a gas barrier point of view, however.

### Example 2

To further explore opportunities, an experiment was conducted in which different barrier coating layer configurations, applied on the same cellulose-based substrate as used in Example 1, and with about the same amounts and thicknesses of the coatings as in Example 1, were further tested regarding ability to heat seal by means of high-frequency induction, as well as regarding oxygen barrier performance.

Six different configurations of barrier coatings were thus applied onto the paper substrate.

The barrier-coated papers were thus each laminated into a laminate structure having the principal structure:
//LDPE outside (12 g/m²)/ paperboard 80 mN/ bonding layer blend LDPE+mLLDPE (15 g/m²)/ barrier-coated paper substrate/ adhesive polymer EAA (6 g/m²)/ LDPE (13 g/m²)/ bi-axially oriented LLDPE film (18 µm)//

The six laminated material samples comprised the following barrier-coated paper substrate materials:
Comparative sample 2: A barrier-coated paper having two consecutive base coating layers of Poval^{®} 6-98 PVOH beneath the metallisation coating, and essentially being the same as of Comparative sample 1 in Table 1.
Comparative sample 3: As comparative sample 2, but with three consecutive base coating layers (of same thicknesses, thus in total a thicker amount of PVOH) of Poval^{®} 6-98 PVOH beneath the metallisation coating.
Comparative sample 4: As comparative sample 3, but with the first base coating layer being a PVOH coating layer of same thickness (0.7 g/m²) and the other two coating layers of being of starch at a coated amount of about 0.5-0.6 g/m².
Comparative sample 5: As comparative sample 4, but with two first base coating layers being PVOH coating layers each of same thickness (0.7 g/m²).
Comparative sample 6: Essentially the same as Sample 1 of Table 1, but having two consecutive coatings of PVOH, of the same grade and amounts as in the other comparative examples above, on the opposite side of the paper substrate.
Sample 2: Essentially the same as Sample 1 of Table 1, but having one single coating of PVOH, of the same grade and amount (0.7 g/m²), on top of the metallisation coating, as a top coating.

The laminated sample structures were fold-formed, filled and sealed into packaging containers filled with water. The emptied packages were evaluated regarding quality of the transversal heat seals in the LS area (LS-TS) and oxygen transmission, in the same way as in connection to Table 1.

The oxygen transmission rate of packages (filled, emptied and dried) was measured according to ASTM F1307-14, at 0.2 atm (surrounding air containing 21 % oxygen). The unit is cm³/package/24h, at conditions of 23 °C and 50 % RH.

For the OTR measurement, the package were mounted on a special holder; inside the package nitrogen is purged; the outside of the package is exposed to the environment surrounding the instrument. When oxygen permeates through the package into the nitrogen carrier gas, it is transported to the coulometric sensor. The sensor reads how much oxygen leaks into the nitrogen gas inside the package.

The obtained resulting oxygen transmission values and the number of visible marks at the LS-TS area from each of the three different power settings, in the tested samples, are as presented in Table 2.

**Table 2**

| **SAMPLE:** | **Comp. Sample 2** | **Comp. Sample 3** | **Comp. Sample 4** | **Comp. Sample 5** | **Comp. Sample 6** | **Sample 2** |
|---|---|---|---|---|---|---|
| Coating | | | | | 2 x PVOH | |
| Cellulose-based substrate | HD paper | HD paper | HD paper | HD paper | HD paper | HD paper |
| Coating | 2 x PVOH | 3 x PVOH | 1x PVOH | 2 x PVOH | 2 x starch | 2 x starch |
| | | | 2 x starch | 2 x starch | | |
| Metallisation until Rs = 0.5 was reached | MET | MET | MET | MET | MET | MET |
| Top coating | | | | | | 1 x PVOH |

| **EVALUATION:** | | | | | | |
|---|---|---|---|---|---|---|
| Number of marks in metallisation coating at the LS-TS seal area; HFIH power level 1500 W | 0 | 0 | 0 | 0 | 0 | 0 |
| Number of marks in metallisation coating at the LS-TS seal area; HFIH power level 2000 W | 5 | 8 | 1 | 2 | 0 | 0 |
| Number of marks in metallisation coating at the LS-TS seal area; HFIH power level 2500 W | 17 | 15 | 9 | 26 | 2 | 0 |
| OTR package cc/package*24h, 0.2 atm O₂ at 23º C, 50 % RH | 0.030 | 0.013 | 0.052 | NA | 0.44 | 0.015 |

Of the different variants of adding PVOH gas barrier material to the barrier coating configuration for the purpose of improving oxygen barrier poperties, in samples 1-6 of Table 2, the configuration involving a top coating of PVOH appears to work best, and moreover unexpectedly also further improves the HFIH sealability properties to endure higher power and induction heat stress.

It may be concluded that only one of the laminated material samples, i.e. Sample 2, did actually achieve both good barrier properties and a good heat seal in the area of LS-TS, which is important regarding barrier and sealing performance of cuboid, fold-formed, carton laminate packages. It is believed that the base coating of a smoothening and a relatively more thermostable material, such as starch, provides a better foundation to enable a barrier layer structure of high quality and performance regarding both induction heat sealing and oxygen barrier performance.

### Example 3

For detecting small pinholes, weakenings and imperfections formed during heat sealing, in the one or more polymer layer(s) on the inside of the metallisation coating, i.e. on the side directed towards the filled product, a method was used, of applying and ramping a high voltage between an electrode, arranged on an area on the inside of the laminated packaging material, and the conductive layer, i.e. the metallisation coating of aluminium. When there is a tiny indication of a weakening, hole or crack in the polymer layer(s), such as a "thinning" (i.e. an area or spot which is only thinly covered with thin polymer material), such that there may develop a contact between the filled liquid or wet product and the metallisation coating, there will be a registerable "dielectric breakdown" between the electrode and the metallisation coating, i.e. a breakage of the voltage, which may also be visible as a light arc between the electrode and the metal coating. The voltage is ramped from an initial lower value towards and upper predetermined value and there will be a value there in-between that causes a dielectric breakdown that may be registered by an oscilloscope. Alternatively, material "thinnings" or weakenings may be detectable by detecting "light sparks" through the weakness in the polymer layer(s) by some kind of photodetector. The ramping of the voltage stresses the metallisation coating an the adjacent layers in the laminated material, such that a breakage of the voltage will occur sooner (at a lower voltage applied) if there is a material thinning, which is further broken by the voltage. In this way, very small areas of thin material or small weakenings may also be observed.

Such a ramping high voltage (RHV) method may thus be used for detecting weaknesses in the inside polymer layers at any area of the packaging material, such as along the longitudinal seal, LS, area.

An RHV detection method used for a different area of similar packaging material (with a conductive layer of a thicker aluminium foil) is described and disclosed in the international patent application No. WO2012/091661A1, and it illustrates the principle further.

Thus, to evaluate the quality and detect defects in the polymer coating at the LS area outside of the LS-TS area, the RHV test method was used, and if the voltage at break was found sufficiently high, the power setting was considered more likely to be practically viable for high frequency induction heat sealing of the tested material. In this way, the window from lowest to highest possible power setting could be explored and verified, at which a satisfactory seal quality and seal strength could be achieved, and without forming defects in the inside polymer materials or the metallisation coating.

**Table 3:**

| **SAMPLE:** | **Comp. Sample 2** | **Comp. Sample 3** | **Comp. Sample 4** | **Comp. Sample 5** | **Comp. Sample 6** | **Sample 2** |
|---|---|---|---|---|---|---|
| Coating | | | | | 2 x PVOH | |
| Cellulose-based substrate | HD paper | HD paper | HD paper | HD paper | HD paper | HD paper |
| Coating | 2 x PVOH | 3 x PVOH | 1 x PVOH | 2 x PVOH | 2 x starch | 2 x starch |
| | | | 2 x starch | 2 x starch | | |
| Metallisation until Rs = 0.5 was reached | MET | MET | MET | MET | MET | MET |
| Top coating | | | | | | 1 x PVOH |

| **EVALUATION:** | | | | | | |
|---|---|---|---|---|---|---|
| HFIH Sealing TS power window [W] | 0 | 0 | 0 | 0 | 0 | 350 |
| HFIH Sealing LS power window [W] | 0 | 0 | 100 | 100 | 0 | 150 |
| HFIH Sealing SA power window [W] | 50 | 200 | 0 | 0 | NA | 500 |
| OTR package cc/package*24h, 0.2 atm O₂ at 23º C, 50 % RH | 0.030 | 0.013 | 0.052 | NA | 0.44 | 0.015 |

In the evaluation of the RHV results, for the exploration of viable power settings and windows of induction heat sealing operation, a ranking from 1-3 was used, wherein
"1"meant that the value of the RHV at dielectric breakdown seldom was lower than about 2 kVolt,
"2" meant that RHV was not measured because the material concept was excluded for other reasons,
"3" meant that the value of the RHV at dielectric breakdown often was lower than 2 kVolt.

Each heat sealing power setting, at which the ranking of the RHV was ranked as "1", i.e. at which there was fewer early (low) breaks of voltage, thus indicating fewer weak spots in the heat seal and inside polymer layer materials, would contribute to determining the " power window" for heat sealing of the tested material. If the heat sealing power window is determined as wider, i.e. comprising a wider range of power settings at which the tested packaging material obtains a rank 1 in the RHV testing, the heat sealing process can be more robust around a predetermined power setting of a filling and sealing machine system, using that specific material. Therefore, this evaluation of the width of the heat sealing power window can indicate the "heat sealing capability" of a material at different sealing areas of a package. The width of power windows (in the power unit Watt) is provided for the different sealing areas, LS, TS and the SA areas. The SA area denotes the LS edge area onto which a heat sealable polymer strip is applied, for providing liquid tightness on the inside of the package versus a filled liquid product, as illustrated in figure 7a.

It can be seen from the results in Table 3 that only Sample 2 offers an induction heat sealing power window at all in the transversal sealing operation, and it is a rather wide window too. Furthermore, the packaging material of Sample 2 offers a wider window regarding both LS and SA high frequency induction heat sealing, in comparison to the Comparative Samples.

Further, relating to the attached figures:

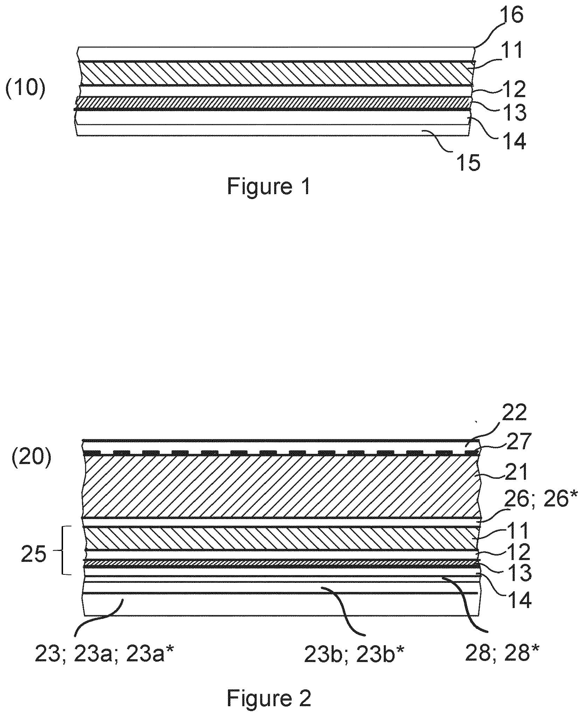

In Fig. 1, there is shown, in cross-section, an embodiment of the barrier-coated cellulose-based substrate 10, made by the method of the invention. The cellulose-based substrate 11 is a paper having a density above 900 kg/m³, a grammage weight of about 40 g/m², a top side rougness Bendtsen value of lower than 30 ml/min and a Cobb 60 value of less than 25 g/m², and is provided with a base coating 12 of starch, such as Etenia^{®} , from Avebe, which has been applied in the form of an aqueous wet coating composition and subsequently heat dried at from 60 to 95 degrees Celsius, to evaporate the water from the wet applied coating. The starch was applied as two consecutive wet coatings with intermediate drying, each at about 0.5 g/m². The total dry weight of the resulting starch base coating is about 1 g/m². Further, the thus base-coated cellulose-based substrate is vapour deposition coated with an aluminium metallisation coating 13, i.e. an aluminium-metallised layer, applied by physical vapour deposition onto the dried surface of the base coating 12, until a sheet resistance of 0.5 ohms/square was obtained.

The thus metallised and base-coated paper substrate has a further thermostable gas-barrier top coating 14 of an aqueous solution of a PVOH, Poval^{®} 6-98 from Kuraray, applied on the surface of the aluminium coating 13. The thermostable gas-barrier top coating 14 has been applied and dried in the same way as the base coating, and the dry weight of the top coating of a PVOH gas barrier composition is about 0.7 g/m². The top coating of the gas barrier PVOH composition is sensitive to moisture, dirt and liquids, why there is optionally applied at least a further layer or coating 15 of a protective polymer onto the top coating layer of PVOH 14. The further layer or coating 15 may be a thermoplastic polymer, such as a polyolefin, such as an LPDE or an ethylene-based adhesive polymer, such as EAA or a maleic anhydride graft copolymer with polyethylene. Such a further polyolefin layer is normally necessary for measuring the oxygen transmission of the barrier-coated cellulose-based substrate, in order to cover any defects, such as pinholes, in the first PVOH coating. If the further protective coating 15 is a made of a thermoplastic polymer or material, the laminated structure 10 will also be a heat-sealable, barrier wrapping or packaging material by itself. The further polymer layer or further coating itself has no or very low inherent oxygen barrier properties and thus does not contribute further to the oxygen transmission value measured. A further layer or coating 16 of a protective polymer, which may be of the same or a different kind as the coating or layer 15, may optionally be applied also onto the other side of the cellulose-based substrate. Consequently, a simple laminated material 10 may be obtained by merely adding outermost, protective polymer layers 15 and 16 to the barrier-coated cellulose-based substrate.

In Fig. 2, a laminated packaging material 20 for packaging of oxygen sensitive products, such as for liquid carton packaging is shown, which comprises the barrier-coated cellulose-based substrate 10; 25, of the invention. The laminated material further comprises a bulk layer 21 of paperboard, having a bending force of 80 mN and a grammage weight of about 200 g/m², and further comprising an outermost, protective, such as liquid tight and heat sealable polymer layer 22 applied on the outside of the bulk layer 21, which side is to be directed towards the outside of a packaging container produced from the packaging laminate. The layer 22 is transparent to show the printed décor pattern 27, which is printed onto the bulk layer of paper or paperboard, to the outside. Thereby, the printed pattern may inform about the contents of the package, the packaging brand and other information targeting consumers in retail facilities and food shops. The polymer of the outermost layer 22 may be a polyolefin, such as a conventional low density polyethylene (LDPE) of a heat sealable quality, but could also include further similar polymers, including LLDPEs. It is applied at an amount of about 12 g/m².

An innermost liquid tight and heat sealable generic layer 23 may be arranged on the opposite side of the bulk layer 21, which is to be directed towards the inside of a packaging container produced from the packaging laminate, i.e. the layer 23 will be in direct contact with the packaged product. The thus innermost heat sealable generic layer 23, which is to form strong transversal heat seals of a liquid packaging container made from the laminated packaging material, may comprise one or more in combination of polyethylenes selected from the groups consisting of LDPE, linear low density polyethylene (LLDPE), and LLDPE produced by polymerising an ethylene monomer with a C4-C8, such as a C6-C8, alpha-olefin alkylene monomer in the presence of a metallocene catalyst, i.e. a so called metallocene - LLDPE (m-LLDPE). The innermost liquid tight and heat sealable generic layer 23 may be applied at an amount of from 20 to 35 g/m².

According to a preferred embodiment, the innermost heat sealable and liquid-tight layer consists of a pre-manufactured, oriented film 23a, comprising at least one part-layer with a major proportion of linear low density polyethylene (LLDPE). The film may further comprise some LDPE. The oriented film 23a is from 12 to 25 µm thick, such as from 15 to 20 µm thick, such as 18 µm thick.

The pre-manufactured, oriented film 23a is laminated to the barrier-coated paper substrate 25, to the surface of its top coating of PVOH 14, by means of an intermediate, melt extrusion laminated bonding-layer portion 28, comprising a tie layer of EAA, at from 5 to 8 µm, and/ or a further bonding layer 23b of LDPE, which is melt extrusion laminated at from 12 to 20 µm, such as from 12 to 18 µm thick.

The innermost heat sealable layer 23 may alternatively consist of two or more coextruded part-layers (23a*, 23b*) of the same or different blends of LDPE and m-LLDPE, which are well adhered to the surface of the thermostable gas barrier top coating 14 of the barrier-coated paper substrate 25; 10, by an intermediate, also coextruded, tie layer, 28* of a few g/m², such as from 4 to 7 g/m², e.g. of ethylene acrylic acid copolymer (EAA) which thus bonds the innermost heat sealable layer(s) to the barrier coated paper substrate 25; 10, in applying the layers together in one single melt coextrusion coating step.

The bulk layer 21 is laminated to the uncoated side of the barrier-coated paper substrate 25; i.e. 10 from Fig. 1, by an intermediate bonding layer 26 of a low density polyethylene (LDPE). The intermediate bonding layer 26 is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 26 is from 12 to 18 µm, such as from 12-15 µm.

In an alternative embodiment, the bulk layer 21 may be laminated to the barrier-coated paper substrate 25, by means of wet lamination with an intermediate bonding layer 26* of a thin layer of adhesive polymer, obtained by applying an aqueous dispersion of a polyvinyl acetate adhesive onto one of the surfaces to be adhered to each other and subsequently pressing together in a roller nip. Such a lamination step is performed in an efficient cold or ambient lamination step at industrial speed without any energy-consuming drying operation needed to accelerate the evaporation of the water. The dry amount applied of the intermediate bonding layer 26* is from 3 to 4 g/m² only, which explains that there is no need for drying and evaporation.

Thus, the amount of thermoplastic polymer can be significantly reduced in this lamination layer, in comparison to the conventional melt extrusion laminated bonding layer 26 of polyethylene, described above in connection to Fig. 2.

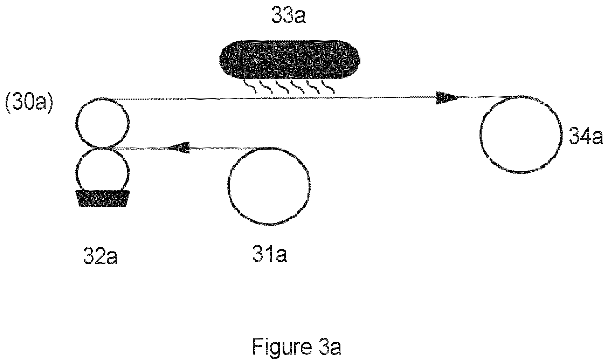

In Fig. 3a, a process of aqueous dispersion coating 30a is shown, which may be used for applying the aqueous composition of gas barrier polymer coating layers 12 and 14. The paper substrate web 31a (e.g. the cellulose-based substrate 11 from Figure 1 is forwarded to the dispersion coating station 32a, where the aqueous composition is applied by means of rollers onto the top side surface of the substrate. If the surfaces of the two sides of the substrate are different, usually there is one side more suitable for receiving a coating or a printed décor pattern, and this is thus the surface to be coated for this invention (this side is called the top side or the print side). Since the composition has an aqueous content of from 80 to 99 weight-%, there will be a lot of water on the wet coated substrate that needs to be dried by heat, and evaporated, to form a continuous coating, which is homogenous and has an even quality with respect to barrier properties and surface properties, i.e. evenness and low occurrence of defects. The drying is carried out by a hot air dryer 33a, which also allows the moisture to evaporate and be removed from the surface of the substrate. The temperature of the substrate surface as it travels through the dryer, is consistently kept below 95 °C, such as at from 60 to 95 °C, such as at from 70 to 90 °C, such as below a temperature from 80 to 90 °C, such as below a temperature of about 85 °C.

The resulting gas-barrier-coated paper substrate web 34a is forwarded to cool off and is wound onto a reel for intermediate storage. At an optional, following or later stage, the thus coated web may be forwarded to a further coating step, such as a physical vapour deposition coating of a barrier deposition coating 13 onto a base-coated paper substrate 11-12.

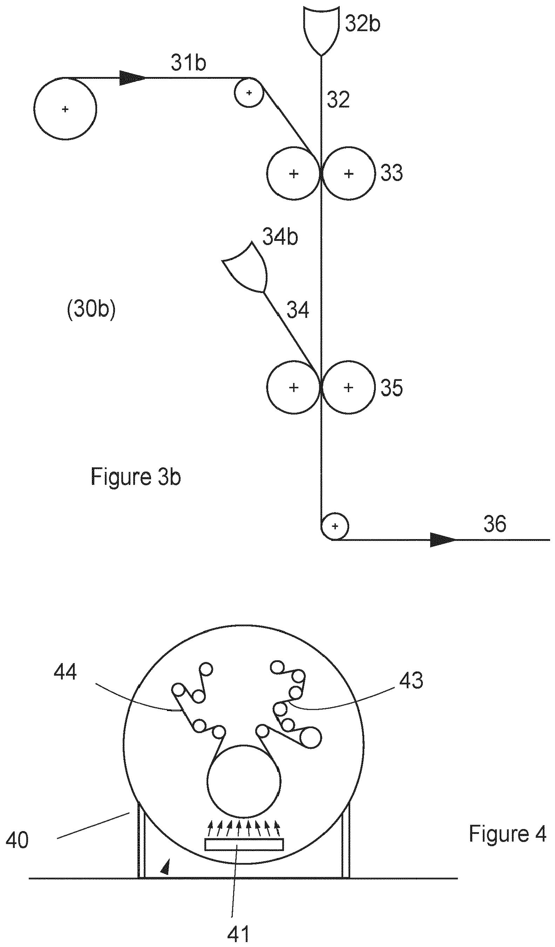

Fig. 3b shows a process for the final lamination steps in the manufacturing of the packaging laminate 20, of Fig. 2, after the bulk layer 21 has been first laminated to the barrier-coated cellulose-based substrate 10 of Fig. 1, (i.e. 25).

As explained in connection to Fig. 2, the bulk layer paperboard 21 may be laminated to the barrier-coated paper substrate 10; 25 by means of wet, ambient aqueous adhesive lamination, or by means of melt extrusion lamination. A wet lamination adhesive may be applied as described in Fig. 3a related to dispersion coating, and the lamination is carried out by simply pressing the surfaces to be joined together, without forced drying of the adhesive composition. The principal method of melt extrusion lamination is shown in Fig. 3b, as described below.

The resulting paper pre-laminate web 31b is forwarded from an intermediate storage reel, or directly from the lamination station for laminating the pre-laminate of the bulk layer to the barrier-coated celullosed substrate. The non-laminated side of the bulk layer 21, i.e. its print side, is melt-extrusion coated by being joined at a cooled roller nip 33 to a molten polymer curtain 32 of the LDPE, which is to form the outermost layer 22 of the laminated material, the LDPE being extruded from an extruder feedblock and die 32b. Subsequently, the pre-laminate bulk-paper web, now having the outermost layer 22 coated on its printed side, i.e. on the outside, passes a second extruder feedblock and die 34b and a lamination nip 35, where a molten polymer curtain 34 is joined and coated onto the other side of the pre-laminate, i.e. on the barrier-coated side of the paper substrate 10; 25. Thus, the innermost heat sealable layer 23a, and an optional interjacent polymer layer 23b, optionally together with a tie layer of an adhesive polymer having functional groups to increase its bonding capability to adjacent layers, are coextrusion coated onto the inner side of the paper pre-laminate web, to form a finished laminated packaging material 20; 36, which is finally wound onto a storage reel, not shown.

These two coextrusion steps at lamination roller nips 33 and 35, may alternatively be performed as two consecutive steps in the opposite order.

According to another embodiment, one or both of the outermost layers may instead be applied in separate pre-lamination stations, where the coextrusion coated layer is first applied to the outside of the (printed) bulk paperboard layer and onto the inside of the barrier-coated paper substrate, and finally thereafter, the two pre-laminated paper webs may be laminated to each other, by extrusion lamination or by wet lamination, as described above.

According to a preferred embodiment, the innermost layers of the heat sealable and liquid-tight thermoplastic layers are applied in the form of a pre-manufactured polymer film 23a, which is laminated to the coated side of the barrier-coated paper substrate 10; 25.

Such a pre-manufactured film for an innermost layer 23a may be laminated to the barrier-coated paper substrate 10; 25 by means of melt extrusion lamination (by melt extruded interjacent layers 23b* and/or 28), or alternatively, by means of wet, ambient aqueous adhesive lamination with an interjacent layer of an adhesive polymer 28*.

Fig. 4 is a diagrammatic view of an example of a plant for physical vapour deposition, PVD, of e.g. an aluminium metal coating, onto a web substrate of the invention. The base-coated paper substrate 44 is forwarded through a deposition chamber, in which it is subjected, on its base-coated side, to continuous evaporation deposition 40, of evaporised aluminium, to form a metallised layer of aluminium. The coating is provided at a thickness from 5 to 100 nm, such as from 10 to 80 nm, preferably from 10 to 50 nm, to form the barrier-coated paper 43 of the invention. The aluminium vapour is formed from ion bombardment of an evaporation source of a solid piece of aluminium 41.

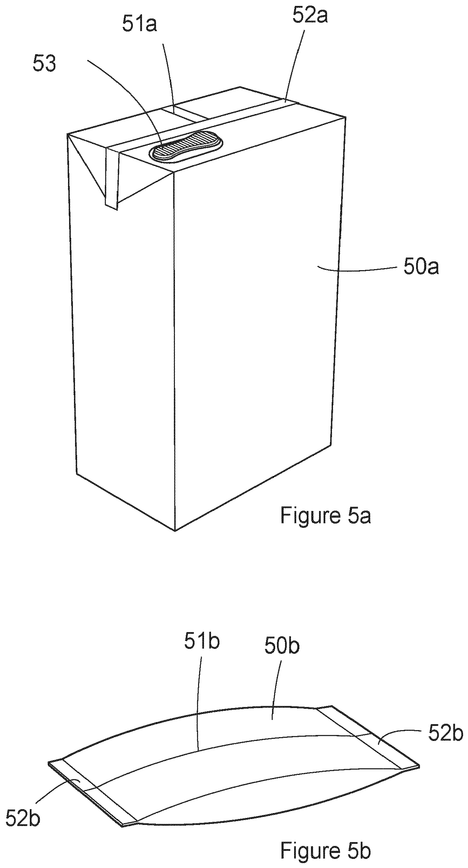

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

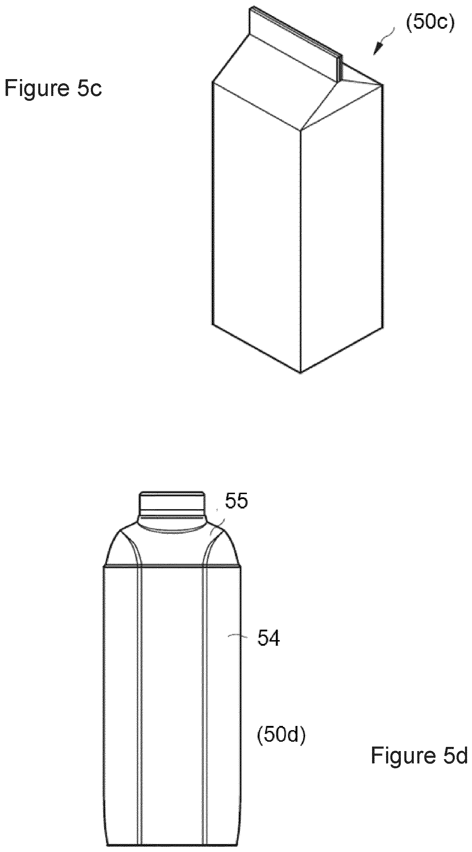

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

As a final remark, the invention is not limited by the embodiments shown and described above, but may be varied within the scope of the claims.

## Claims

1. Barrier-coated cellulose-based substrate (10), for use as a barrier sheet in a heat-sealable laminated packaging material for packaging of oxygen-sensitive products, comprising
a cellulose-based substrate (11) and
a base coating (12), comprising more than 60 weight-% of a material selected from the group consisting of starch, modified starch materials and cellulose ethers, applied onto the surface of a first side of the cellulose-based substrate by means of dispersion or solution coating and subsequent drying, thus providing a smooth and thermo-mechanically resistant base coating, and
a metallization coating (13) further applied onto the free surface of the base coating, the metallization coating being applied onto the base coating by means of a vapour deposition method, wherein
the barrier-coated cellulose-based substrate (10) further comprises a thermostable gas-barrier top coating (14), which is applied by means of dispersion or solution coating onto the metallization coating (13) and subsequent drying, and wherein
the thermostable gas-barrier top coating (14) is further coated with or laminated to a heat sealable layer (15) of a thermoplastic material, the thermostable gas-barrier top coating having a melting temperature higher than the heat sealable layer of the thermoplastic material,
the barrier-coated cellulose-based substrate thus providing good gas barrier properties, as well as enabling robust induction heat sealing conditions in a laminated packaging material for manufacturing of packages therefrom.

2. Barrier-coated cellulose-based substrate (10) as claimed in claim 1, wherein the base coating (12) comprises more than 70 weight-%, such as more than 80 weight-%, such as more than 90 weight-%, of the material selected from the group consisting of starch, modified starch materials and cellulose ethers.

3. Barrier-coated cellulose-based substrate as claimed in any one of the preceding claims, wherein the base coating (12) is applied at an amount of from 0.5 to 2 g/m², preferably from 0.5 to 1.5 g/m², dry weight.

4. Barrier-coated cellulose-based substrate as claimed in any one of the preceding claims, wherein the base coating (12) is applied as two consecutive coatings with intermediate drying, each at an amount of from 0.2 to 0.8 g/m², such as from 0.5 to 0.7 g/m², dry weight.

5. Barrier-coated cellulose-based substrate as claimed in any one of the preceding claims, wherein the base coating (12) further comprises inorganic particles or filler material, such as at an amount from 1 to 30 weight-%.

6. Barrier-coated cellulose-based substrate as claimed in any one of the preceding claims, wherein the metallization coating (13) is a vapour deposited coating of a metal, such as an aluminium coating.

7. Barrier-coated cellulose-based substrate as claimed in any one of the preceding claims, wherein the metallization coating (13) is applied by physical vapour deposition to a sheet resistance value of from 0.25 to 0.75 Ω□, such as from 0.4 to 0.6 Ω□.

8. Barrier-coated cellulose-based substrate as claimed in any one of the preceding claims, wherein the thermostable gas-barrier top coating (14) comprises a polymer selected from the group consisting of vinyl alcohol polymers and copolymers, such as from the group consisting of polyvinyl alcohol, PVOH, ethylene vinyl alcohol, EVOH, modified vinyl alcohol polymers and copolymers, such as modified PVOH and modified EVOH, and blends comprising in the majority such polymers.

9. Barrier-coated cellulose-based substrate as claimed in any one of the preceding claims, wherein the thermostable gas-barrier top coating (14) further comprises a copolymer of ethylene with acrylic or methacrylic acid, EAA or EMAA.

10. Barrier-coated cellulose-based substrate as claimed in any one of the preceding claims, wherein the thermostable gas-barrier top coating (14) is applied at an amount of from 0.5 to 2 g/m², preferably from 0.5 to 1.5 g/m², dry weight.

11. Barrier-coated cellulose-based substrate as claimed in any one of the preceding claims, wherein the thermostable gas-barrier top coating (14) is applied as two consecutive coatings with intermediate drying, each at an amount of from 0.2 to 1.5 g/m², such as from 0.2 to 1 g/m², such as from 0.5 to 0.8 g/m², dry weight.

12. Barrier-coated cellulose-based substrate as claimed in any one of the preceding claims, wherein the substrate is a paper having a grammage from 30 to 70 g/m², as measured according to ISO 536:2012, and a density from 800 kg/m³ to 1400 kg/m³, as measured according to ISO 534:2011.

13. Method for manufacturing a barrier-coated cellulose-based substrate (10) for use in heat-sealable laminated packaging material for packaging of oxygen-sensitive products, the method comprising the steps of
a) forwarding a continuous web of a cellulose-based substrate (11; 31a),
b) providing an aqueous base coating composition comprising more than 60 weight-% of a material selected from the group consisting of starch, modified starch materials and cellulose ethers, per dry weight,
c) applying the aqueous base coating composition onto the top side of the web of the cellulose-based substrate by means of dispersion coating (32a), such as a roll coating method,
d) drying (33a) the applied aqueous gas barrier polymer coating from step c), to provide a smooth, base coating layer (12),
e) optionally repeating steps c) and d),
f) vapour deposition coating (40) the base-coated and dried web substrate as obtained from step e), with a metallization coating (13),
g) applying an aqueous solution or dispersion (32a) of a thermostable gas-barrier top coating material onto the metallization coating, such as by a roll coating method,
h) drying (33a) the applied aqueous solution or dispersion from step g) to obtain a thermostable gas-barrier top coating (14),
i) optionally repeating steps g) and h),
j) thus obtaining a barrier-coated cellulose-based substrate having a minimum of defects in the base coating, in the gas barrier top coating as well as in the metallization coating,
k) further coating the surface of the thermostable gas-barrier top coating with a heat sealable layer (15) of a thermoplastic material, the thermostable gas-barrier top coating layer having a melting temperature higher than the heat sealable layer of the thermoplastic material.

14. Method as claimed in claim 13, wherein the thermostable gas-barrier top coating (14) comprises a polymer selected from vinyl alcohol polymers and copolymers, such as from the group consisting of polyvinyl alcohol, PVOH, ethylene vinyl alcohol, EVOH, modified vinyl alcohol polymers and copolymers, such as modified PVOH and modified EVOH, and blends comprising in the majority such polymers.

15. Laminated packaging material (20) comprising the barrier-coated cellulose-based substrate (10; 25) as claimed in any one of claims 1-12, and further comprising a first outermost, protective material layer (22) and a second innermost liquid tight, heat sealable material layer (23; 23a; 23a*).

16. Laminated packaging material (20) comprising the barrier-coated cellulose-based substrate (10; 25) as claimed in any one of claims 1-12, and further comprising a first outermost liquid tight, heat sealable polyolefin layer (22) and a second innermost liquid tight, heat sealable polyolefin layer (23; 23a; 23a*).

17. Laminated packaging material (20) according to any one of claims 15 and 16, further comprising a bulk layer (21) of paper or paperboard or other cellulose-based material and, arranged on the inner side of the bulk layer of paper or paperboard, between the bulk layer and the second innermost liquid tight, heat sealable material layer or polyolefin layer (23; 23a; 23a*), the barrier-coated cellulose-based substrate (10; 25).

18. Laminated packaging material (20) according to claim 17, wherein the barrier-coated cellulose-based substrate (10; 25) is bonded to the bulk layer (21) by an intermediate bonding layer (26) comprising a composition comprising a binder selected from the group consisting of acrylic polymers and copolymers, starch, starch derivatives, cellulose and polysaccharide derivatives, polymers and copolymers of vinyl acetate and/or vinyl alcohol, and copolymers of styrene-acrylic latex or styrene-butadiene latex.

19. Laminated packaging material (20) according to any one of claims 15-18, wherein the second innermost liquid tight, heat sealable material layer (23) is a pre-manufactured polyolefin film (23a), such as an oriented polyethylene film comprising at least one layer with a majority of an LLDPE polymer, for improved robustness of the mechanical properties of the laminated packaging material.

20. Packaging container (50a; 50b; 50c; 50d) comprising the laminated packaging material as defined in any one of claims 15-19.
